# EUROPÄISCHE PATENTSCHRIFT

(11) **EP 1 190 922 B1**
(45) Veröffentlichungstag und Bekanntmachung des Hinweises auf die Patenterteilung: **17.08.2005**
(21) Anmeldenummer: 01122787.3
(22) Anmeldetag: 21.09.2001
(51) Int. Cl.: B60S 1/60, B60S 1/52

(54) **Reinigungsanlage für eine Scheibe und Verfahren zur Reinigung einer Scheibe**
Cleaning device for a glass pane and method for cleaning a glass pane
Dispositif de nettoyage d'une vitre et méthode de nettoyage d'une vitre

(30) Priorität: 26.09.2000 DE 10048033
(43) Veröffentlichungstag der Anmeldung: 27.03.2002
(73) Patentinhaber: SIEMENS AKTIENGESELLSCHAFT, 80333 München (DE)
(72) Erfinder: Kober, Rainer, 64297 Darmstadt (DE)
(74) Vertreter: Rassler, Andrea

(56) Entgegenhaltungen:
- EP-A- 0 904 999
- WO-A-99/54177
- DE-A- 3 715 798
- US-A- 3 609 450
- US-A- 3 913 840
- US-A- 4 713 583

## Beschreibung

Die Erfindung betrifft eine Reinigungsanlage für eine Scheibe, insbesondere eine Streuscheibe eines Scheinwerfers eines Kraftfahrzeuges, mit zumindest einer zur Besprühung der Scheibe mit Waschflüssigkeit vorgesehenen Waschdüse und Mitteln zur Erzeugung eines Durchflusses an Waschflüssigkeit durch die Waschdüse und mit einem Sensor zur Erfassung eines Verschmutzungsgrades der Scheibe und einer Steuereinheit zur Ansteuerung der Mittel zur Erzeugung des Durchflusses. Weiterhin betrifft die Erfindung ein Verfahren zur Reinigung einer Scheibe, insbesondere einer Streuscheibe eines Scheinwerfers eines Kraftfahrzeuges, bei dem Waschflüssigkeit auf die Scheibe gesprüht wird, wobei vor der Besprühung der Scheibe der Verschmutzungsgrad der Scheibe erfaßt wird und unterhalb eines vorgesehenen Verschmutzungsgrades die Besprühung unterbleibt.

Eine solche Reinigungsanlage und ein Verfahren zu dessen Betrieb ist aus der US 3,609,450 bekannt. Bei dieser Reinigungsanlage ist der Sensor in einem Randbereich der Streuscheibe des Scheinwerfers angeordnet. Die Reinigungsanlage wird automatisch gestartet, wenn die Intensität des die Streuscheibe durchdringenden Lichts einen vorgesehenen Wert unterschreitet. Nachteilig hierbei ist jedoch, daß der für die Ausleuchtung der Straße maßgebliche Bereich der Scheibe nicht zuverlässig erfaßt wird.

Der Erfindung liegt das Problem zugrunde, eine Reinigungsanlage der eingangs genanten Art so zu gestalten, daß sie die Scheibe mit einem besonders geringen Wasserverbrauch zuverlässig sauber hält. Weiterhin liegt der Erfindung das Problem zugrunde, ein Verfahren zur Reinigung einer Scheibe der eingangs genannten Art so weiterzubilden, daß es einen besonders geringen Verbrauch an Waschflüssigkeit hat.

Das erstgenannte Problem wird erfindungsgemäß dadurch gelöst, daß der Sensor auf einem über die Scheibe bewegbaren Halteteil angeordnet ist.

Durch diese Gestaltung wird die Scheibe ständig ausreichend sauber gehalten, ohne dabei die Aufmerksamkeit des Fahrers des Kraftfahrzeuges zu belasten. Hierdurch wird eine Blendwirkung des Gegenverkehrs durch eine verschmutzte Scheibe zuverlässig verhindert. Der Verschmutzungsgrad wird durch die Anordnung des Sensors auf dem über die Scheibe bewegbaren Halteteil in den für die Ausleuchtung der Straße maßgeblichen Bereich gemessen. Die dauerhaft saubere Scheibe trägt auch zur Erhöhung der Sicherheit des Kraftfahrzeuges bei, da hierdurch die eigene Fahrbahn zuverlässig ausgeleuchtet wird. Da sich eine Besprühung der Scheibe mit Waschflüssigkeit vermeiden läßt, wenn die Scheibe ausreichend sauber ist, benötigt die erfindungsgemäße Reinigungsanlage besonders wenig Waschflüssigkeit.

Die Erfassung des Verschmutzungsgrades gestaltet sich gemäß einer vorteilhaften Weiterbildung der Erfindung besonders einfach, wenn der Sensor zur Erfassung von sichtbarem Licht oder infrarotem Licht gestaltet ist.

Der Sensor könnte beispielsweise die Reflektionen einer Lichtquelle erfassen. Der Sensor verursacht jedoch einen besonders geringen baulichen Aufwand, wenn er zur Erfassung der Transmission des durch die Scheibe transmittierten Lichts gestaltet ist. Hierdurch erfordert die für eine Streuscheibe eines Scheinwerfers vorgesehene Reinigungsanlage keine eigene Lichtquelle.

Die erfindungsgemäße Reinigungsanlage gestaltet sich konstruktiv besonders einfach, wenn die Waschdüse auf dem Halteteil befestigt ist. Hierdurch läßt sich die Waschdüse beim Reinigen über die Scheibe fahren und diese damit ausschließlich durch Besprühen mit Waschflüssigkeit reinigen.

Der auf dem beweglichen Halteteil angeordnete Sensor könnte beispielsweise mittels einer langen elektrischen Leitung oder mittels Schleifkontakte mit der Steuereinheit verbunden sein. Die Verbindung zwischen dem Sensor und der Steuereinheit gestaltet sich jedoch gemäß einer anderen vorteilhaften Weiterbildung der Erfindung besonders störungsunanfällig, wenn zwischen dem in dem Halteteil angeordneten Sensor und der Steuereinheit eine induktive Übertragungseinrichtung für Signale des Sensors und für elektrische Energie für den Sensor angeordnet ist.

Die Verbindung zwischen dem Sensor und der Steuereinheit gestaltet sich gemäß einer anderen vorteilhaften Weiterbildung der Erfindung besonders kostengünstig, wenn zwischen dem Sensor und der Steuereinheit bei einer Bewegung des Halteteils aus einer Grundstellung heraus sich lösende Steckkontakte angeordnet sind.

Der Sensor vermag für eine vorgesehene Zeitspanne ohne Verbindung mit der Steuereinheit den Verschmutzungsgrad zu erfassen, wenn in dem Halteteil ein Speicher für Signale des Sensors und für elektrische Energie für den Sensor angeordnet ist.

Der elektrische Speicher gestaltet sich gemäß einer anderen vorteilhaften Weiterbildung der Erfindung besonders kostengünstig, wenn der Speicher für elektrische Energie für den Sensor als Kondensator ausgebildet ist.

Die erfindungsgemäße Reinigungsanlage benötigt gegenüber der bekannten Reinigungsanlage besonders wenig zusätzliche Bauteile, wenn die Steuereinheit zur Ansteuerung einer die Waschdüse mit Waschflüssigkeit versorgenden Förderpumpe und/oder zwischen der Förderpumpe und der Waschdüse angeordneten Rückschlagventilen oder schaltbaren Ventilen gestaltet ist. Durch die Anordnung von schaltbaren Ventilen vor den Waschdüsen lassen sich die Scheiben zweier Scheinwerfer einzeln reinigen. Dies trägt zur Verringerung des Verbrauchs an Waschflüssigkeit bei.

Das zweitgenannte Problem, nämlich die Schaffung eines Verfahrens zur Reinigung einer Scheibe der eingangs genannten Art mit einem besonders geringen Verbrauch an Waschflüssigkeit, wird erfindungsgemäß dadurch gelöst, dass ein den Verschmutzungsgrad erfassender Sensor über die Scheibe bewegt wird.

Durch diese Gestaltung wird nur dann Waschflüssigkeit auf die Scheibe gesprüht, wenn diese den vorgesehenen Verschmutzungsgrad überschreitet. Ein überflüssiges Reinigen der Scheibe durch manuelle Betätigung der Reinigungsanlage wird mit dem erfindungsgemäßen Verfahren vermieden. Ein weiterer Vorteil des erfindungsgemäßen Verfahrens besteht darin, daß sich dank der Erfindung die Scheibe zuverlässig sauber halten läßt. Dies führt zu einer zuverlässigen Ausleuchtung der Fahrbahn und zu einer besonders geringen Blendwirkung für den Gegenverkehr. Der Verschmutzungsgrad läßt sich in einem beliebigen Bereich der Scheibe messen, weil der den Verschmutzungsgrad erfassende Sensor über die Scheibe bewegt wird.

Die Scheibe wird gemäß einer vorteilhaften Weiterbildung der Erfindung auch bei nicht eingeschaltetem Abblendlicht regelmäßig auf ihren Verschmutzungsgrad überwacht und läßt sich bei Überschreitung regelmäßig reinigen, wenn in vorgesehenen Intervallen ein Meßprogramm zur Erfassung des Verschmutzungsgrades gestartet wird, wobei vom Meßprogramm die unterschiedlichen Bedingungen "Abblendlicht ein/aus" berücksichtigt werden. Auf diese Weise wird der Verschmutzungsgrad der Scheinwerfer unabhängig von deren Betrieb gering gehalten. Ein Anwachsen der Verschmutzung infolge des Nichtbetreibens der Scheinwerfer wird vermieden.

Ein Verbrauch von Reinigungsflüssigkeit bei ausgeschaltetem Scheinwerfer läßt sich gemäß einer anderen vorteilhaften Weiterbildung der Erfindung vermeiden, wenn das Meßprogramm bei jedem Einschalten des Scheinwerfers gestartet wird.

Eine Belästigung anderer Verkehrsteilnehmer mit Spritzwasser läßt sich gemäß einer anderen vorteilhaften Weiterbildung der Erfindung einfach vermeiden, wenn ein Start des Meßprogramms unterhalb einer vorgesehenen Geschwindigkeit des Kraftfahrzeuges unterbunden wird. Diese Geschwindigkeit kann beispielsweise bei 5 oder 10 km/h liegen.

Die Reinigung der Scheibe läßt sich gemäß einer anderen vorteilhaften Weiterbildung der Erfindung einfach überprüfen, wenn das Meßprogramm nach einer Besprühung der Scheibe erneut gestartet wird. Bei nicht ausreichender erster Reinigung kann hierdurch erneut gereinigt werden.

Eine Verschwendung von Waschflüssigkeit bei einer fehlerhaften Erfassung des Verschmutzungsgrades oder einer nicht entfernbaren Verschmutzung von der Scheibe läßt sich gemäß einer anderen vorteilhaften Weiterbildung der Erfindung einfach vermeiden, wenn der Start des Meßprogramms nach einer vorgesehenen Anzahl von Besprühungen der Scheibe unterbunden wird.

Der Aufwand zur Messung des Verschmutzungsgrades eines großen Bereichs der Scheibe läßt sich gemäß einer anderen vorteilhaften Weiterbildung der Erfindung besonders gering halten, wenn bei der Bewegung des Sensors über die Scheibe mehrere vorgesehene Meßpunkte abgefahren werden und der Verschmutzungsgrad an den Meßpunkten gemessen wird. Bei Scheiben heutiger Scheinwerfer genügen meist drei Meßpunkte.

Zur weiteren Verringerung des Wasserverbrauchs trägt es gemäß einer anderen vorteilhaften Weiterbildung der Erfindung bei, wenn der Sensor zusammen mit einer Waschdüse über die Scheibe gefahren, ein hinter der Scheibe angeordneter Scheinwerfer aktiviert wird und wenn die Besprühung der Scheibe außerhalb des Bereichs mit hoher Lichtintensität unterbleibt.

Irritationen des Fahrers durch Sprühnebel vor dem Kraftfahrzeug lassen sich gemäß einer anderen vorteilhaften Weiterbildung der Erfindung einfach vermeiden, wenn der Fahrer des Kraftfahrzeuges gewarnt wird, bevor die Scheibe mit Waschflüssigkeit besprüht wird.

Die erfindungsgemäße Vorrichtung und das Verfahren sind jedoch nicht allein auf Streuscheiben von Scheinwerfern beschränkt. Insbesondere für offroad-Fahrzeuge und Nutzfahrzeuge, z.B. Baufahrzeuge, Busse und Gefahrengut-Transporter, eignet sich der Erfindungsgegenstand als Heckleuchten-Reinigung.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine schematische Darstellung einer erfindungsgemäßen Reinigungsanlage,
- Fig.2: eine stark vergrößerte Darstellung eines Halteteils einer Waschdüse der erfindungsgemäßen Reinigungsanlage aus Figur 1,
- Fig.3: ein erfindungsgemäßes Verfahren zur Reinigung einer Scheibe.

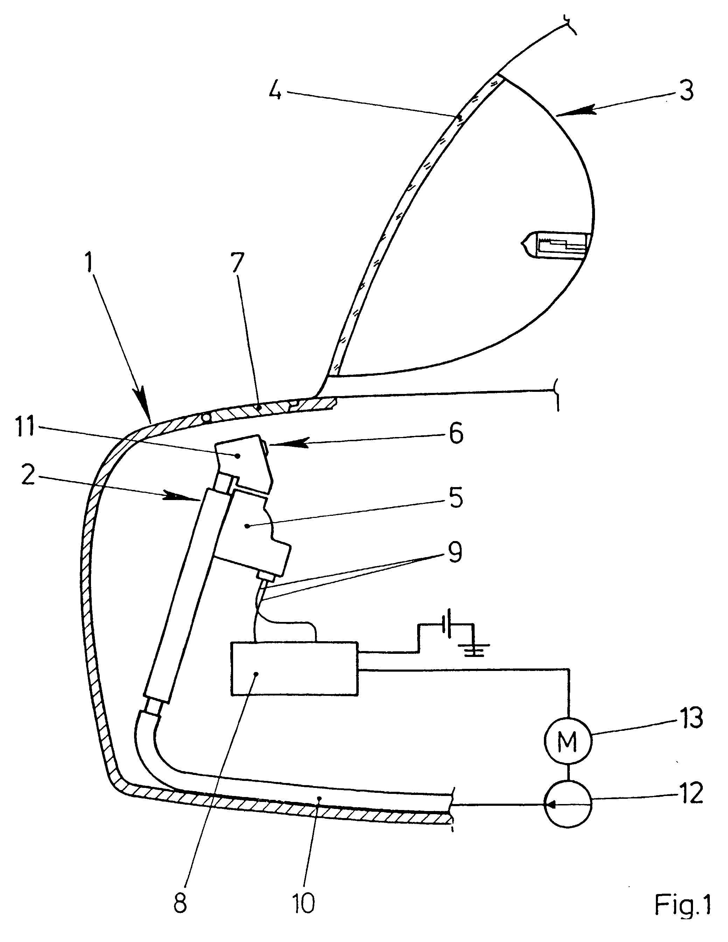

Figur 1 zeigt eine in einem vorderen Stoßfänger 1 eines Kraftfahrzeuges montierte Reinigungsanlage 2. Oberhalb des Stoßfängers 1 ist eine als Streuscheibe für einen Scheinwerfer 3 des Kraftfahrzeuges ausgebildete Scheibe 4 angeordnet. Die Reinigungsanlage 2 hat eine von einer Stelleinrichtung 5 verfahrbare Waschdüse 6. Die Waschdüse 6 befindet sich in hier in einer Ruhestellung unterhalb einer Klappe 7 des Stoßfängers 1. An der Stelleinrichtung 5 sind zu einer Steuereinheit 8 führende elektrische Leitungen 9 und eine Waschflüssigkeitsleitung 10 angeschlossen. Die Waschdüse 6 ist auf einem Halteteil 11 angeordnet und wird über die Waschflüssigkeitsleitung 10 von einer Förderpumpe 12 mit Waschflüssigkeit versorgt. Ein von der Steuereinheit 8 ansteuerbarer Elektromotor 13 treibt die Förderpumpe 12 an.

Zum Reinigen der Scheibe 4 wird die Stelleinrichtung 5 aktiviert und der Elektromotor 13 der Förderpumpe 12 angesteuert. Dabei bewegt sich die Waschdüse 6 über die Scheibe 4. Die Scheibe 4 wird dabei mit Waschflüssigkeit besprüht. Durch eine entsprechende Wahl der Waschdüse 6 läßt sich die Scheibe 4 durch ausschließliches Aufsprühen der Waschflüssigkeit ohne ein Nachwischen reinigen.

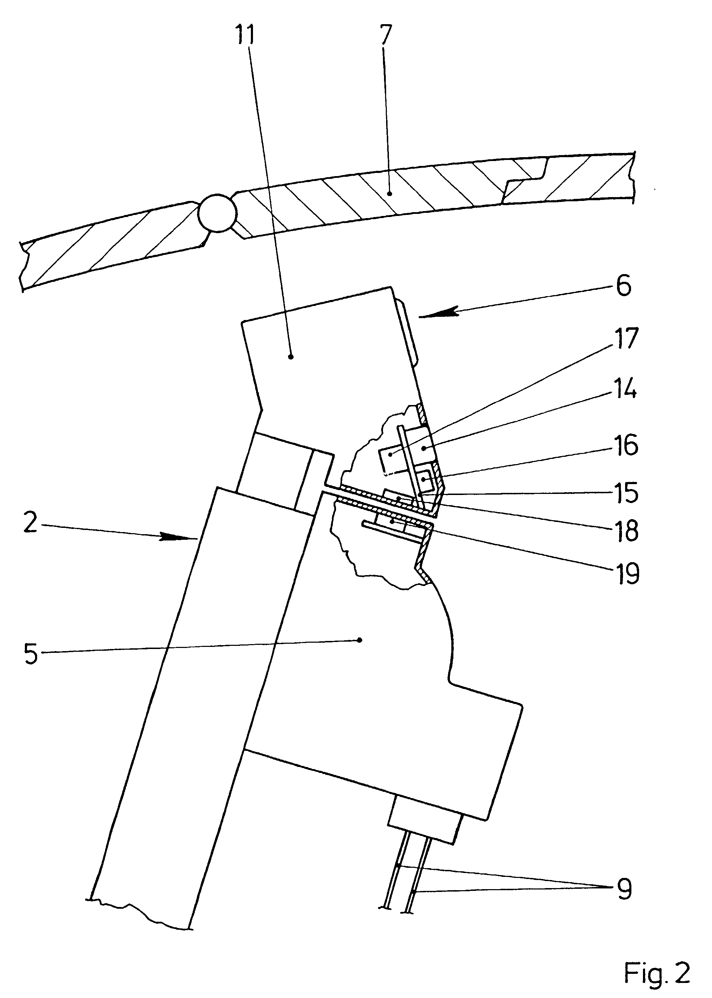

Figur 2 zeigt stark vergrößert und teilweise geschnitten das Halteteil 11 und daran angrenzende Bereiche der Stelleinrichtung 5. Hierbei ist zu erkennen, daß in dem Halteteil 11 unmittelbar unterhalb der Waschdüse 6 ein Sensor 14 angeordnet ist. Der Sensor 14 ist bei einem Betrieb des in Figur 1 dargestellten Scheinwerfers 3 zur Erfassung von durch die Scheibe 4 transmittiertem sichtbaren Licht oder infrarotem Licht gestaltet. Das transmittierte Licht ist damit ein Maß für den Verschmutzungsgrad der Scheibe 4. Der Sensor 14 ist auf einer Platine 15 angeordnet. Auf der Platine 15 sind zudem jeweils ein Speicher 16, 17 für elektrische Energie und für Signale des Sensors 14 sowie eine Spule 18 angeordnet. Die Spule 18 steht einer in dem Halteteil 11 angeordneten Spule 19 gegenüber. Über die Spulen 18, 19 wird induktiv elektrischer Strom für den Sensor 14 und die Signale des Sensors 14 übertragen. Die Signale des Sensors 14 werden anschließend zu der in Figur 1 dargestellten Steuereinheit 8 geleitet. Die Steuereinheit 8 ermittelt aus den Signalen des Sensors 14 den Verschmutzungsgrad der Scheibe 4 und steuert in Abhängigkeit hiervon die Förderpumpe 12 und die Stelleinrichtung 5 an oder unterbindet die Ansteuerungen.

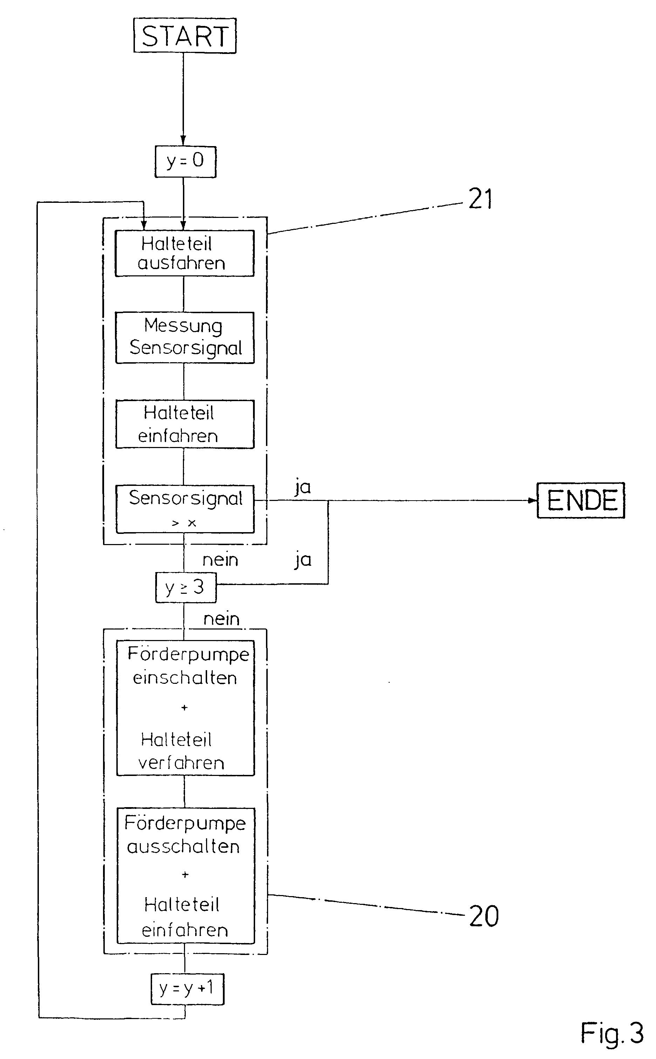

Figur 3 zeigt ein Verfahren zur Reinigung der in Figur 1 dargestellten Scheibe 4. Das Verfahren hat ein Reinigungsprogramm 20 und ein Meßprogramm 21 und wird beispielsweise über eine Zeitschaltuhr oder bei Überschreitung einer Geschwindigkeit des Kraftfahrzeuges gestartet. Eine Bedingung des Starts des Verfahrens ist zudem, daß der Scheinwerfer 3 eingeschaltet ist.

In einem ersten Schritt des Meßprogramms 21 wird das Halteteil 11 ausgefahren und dabei der Sensor 14 über die Scheibe 4 bewegt. Hierbei können vorgesehene Punkte der Scheibe 4 angefahren werden. Anschließend wird das Sensorsignal gemessen. Da der Sensor 14 das von dem Scheinwerfer 3 emittierte Licht mißt, entsprechen die Signale des Sensors 14 dem durch die Scheibe 4 transmittierten Licht und sind damit ein Maß für den Verschmutzungsgrad der Scheibe 4. Anschließend wird das Halteteil 11 eingefahren und abgespeicherte Signale des Sensors 14 induktiv der Steuereinheit 8 übermittelt. Die Steuereinheit 8 vergleicht die Sensorsignale mit einem zuvor abgespeicherten Wert "X". Der Wert "X" entspricht einem Wert für Sensorsignale für eine ausreichend saubere Scheibe 4. Ergibt der Vergleich, daß die Scheibe 4 ausreichend sauber ist, wird das Verfahren ohne Reinigung der Scheibe 4 beendet.

Im anderen Fall wird das Reinigungsprogramm 20 gestartet. Bei dem Reinigungsprogramm 20 wird das Halteteil 11 bei angetriebener Förderpumpe 12 über der Scheibe 4 verfahren. Die Bewegung des Halteteils 11 und der Antrieb der Förderpumpe 12 können über ein weiteres Programm aneinander gekoppelt sein. Alternativ dazu kann auch zunächst das Halteteil 11 über die Scheibe 4 verfahren werden und die Förderpumpe 12 erst dann eingeschaltet werden, wenn die Signale des Sensors 14 einen vorgesehenen Wert überschreiten. Hierdurch wird sichergestellt, daß nur diejenigen Bereiche der Scheibe 4 gereinigt werden, die von dem Scheinwerfer 3 durchleuchtet werden. Zum Abschluß des Reinigungsprogramms 20 wird die Förderpumpe 12 ausgeschaltet und das Halteteil 11 eingefahren.

Das Reinigungsprogramm 20 wird in dem Ausführungsbeispiel höchstens dreimal durchlaufen. Nach jedem Durchlauf des Reinigungsprogramms 20 wird die Reinigungswirkung durch ein Durchlaufen des Meßprogramms 21 überprüft. Wenn die Scheibe 4 nach dem dritten Durchlauf des Reinigungsprogramms 20 noch immer verschmutzt ist, wird die weitere Reinigung eingestellt und das Verfahren beendet. Anschließend kann beispielsweise eine Fehlermeldung abgespeichert werden oder der Fahrer des Kraftfahrzeuges auf eine besonders starke Verschmutzung der Scheibe 4 des Scheinwerfers 3 hingewiesen werden.

## Patentansprüche

1. Reinigungsanlage für eine Scheibe (4), insbesondere eine Streuscheibe eines Scheinwerfers eines Kraftfahrzeuges, mit zumindest einer zur Besprühung der Scheibe (4) mit Waschflüssigkeit vorgesehenen Waschdüse und mit Mitteln zur Erzeugung eines Durchflusses an Waschflüssigkeit durch die Waschdüse und mit einem Sensor (14) zur Erfassung eines Verschmutzungsgrades der Scheibe (4) und einer Steuereinheit (8) zur Ansteuerung der Mittel zur Erzeugung des Durchflusses, **dadurch gekennzeichnet, dass** der Sensor (14) auf einem über die Scheibe (4) bewegbaren Halteteil (11) angeordnet ist.

2. Reinigungsanlage nach Anspruch 1, **dadurch gekennzeichnet, daß** der Sensor (14) zur Erfassung von sichtbarem Licht oder infrarotem Licht gestaltet ist.

3. Reinigungsanlage nach Anspruch 1 oder 2, **dadurch gekennzeichnet, daß** der Sensor (14) zur Erfassung der Transmission des durch die Scheibe (4) transmittierten Lichts gestaltet ist.

4. Reinigungsanlage nach zumindest einem der vorhergehenden Ansprüche,**dadurch gekennzeichnet, daß** die Waschdüse (6) auf dem Halteteil (11) befestigt ist.

5. Reinigungsanlage nach zumindest einem der vorhergehenden Ansprüche,**dadurch gekennzeichnet, daß** zwischen dem in dem Halteteil (11) angeordneten Sensor (14) und der Steuereinheit (8) eine induktive Übertragungseinrichtung für Signale des Sensors (14) und für elektrische Energie für den Sensor (14) sowie für eine Düsenheizung angeordnet ist.

6. Reinigungsanlage nach zumindest einem der vorhergehenden Ansprüche, **dadurch gekennzeichnet, daß** zwischen dem Sensor (14) und der Steuereinheit (8) bei einer Bewegung des Halteteils (11) aus einer Grundstellung heraus sich lösende Steckkontakte angeordnet sind.

7. Reinigungsanlage nach zumindest einem der vorhergehenden Ansprüche,**dadurch gekennzeichnet, daß** in dem Halteteil (11) ein Speicher (16, 17) für Signale des Sensors (14) und für elektrische Energie für den Sensor (14) angeordnet ist.

8. Reinigungsanlage nach Anspruch 7, **dadurch gekennzeichnet, daß** der Speicher (17) für elektrische Energie für den Sensor (14) als Kondensator ausgebildet ist.

9. Reinigungsanlage nach zumindest einem der vorhergehenden Ansprüche, **dadurch gekennzeichnet, daß** die Steuereinheit (8) zur Ansteuerung einer die Waschdüse (6) mit Waschflüssigkeit versorgenden Förderpumpe (12) und/oder zwischen der Förderpumpe (12) und der Waschdüse (6) angeordneten schaltbaren Ventilen gestaltet ist.

10. Verfahren zur Reinigung einer Scheibe, insbesondere einer Streuscheibe eines Scheinwerfers eines Kraftfahrzeuges, bei dem Waschflüssigkeit auf die Scheibe gesprüht wird, wobei vor einer Besprühung der Scheibe der Verschmutzungsgrad der Scheibe erfaßt wird und unterhalb eines vorgesehenen Verschmutzungsgrades die Besprühung unterbleibt, **dadurch gekennzeichnet, daß** ein den Verschmutzungsgrad erfassender Sensor über die Scheibe bewegt wird.

11. Verfahren nach Anspruch 10, **dadurch gekennzeichnet, daß** in vorgesehenen Intervallen ein Meßprogramm zur Erfassung des Verschmutzungsgrades gestartet wird.

12. Verfahren nach Anspruch 10 oder 11, **dadurch gekennzeichnet, daß** das Meßprogramm bei jedem Einschalten des Scheinwerfers gestartet wird.

13. Verfahren nach zumindest einem der vorhergehenden Ansprüche, **dadurch gekennzeichnet, daß** ein Start des Meßprogramms unterhalb einer vorgesehenen Geschwindigkeit des Kraftfahrzeuges unterbunden wird.

14. Verfahren nach zumindest einem der vorhergehenden Ansprüche, **dadurch gekennzeichnet, daß** das Meßprogramm nach einer Besprühung der Scheibe erneut gestartet wird.

15. Verfahren nach zumindest einem der vorhergehenden Ansprüche, **dadurch gekennzeichnet, daß** der Start des Meßprogramms nach einer vorgesehenen Anzahl von Besprühungen der Scheibe unterbunden wird.

16. Verfahren nach zumindest einem der vorhergehenden Ansprüche, **dadurch gekennzeichnet, daß** bei der Bewegung des Sensors über die Scheibe mehrere vorgesehene Meßpunkte abgefahren werden und daß der Verschmutzungsgrad an den Meßpunkten gemessen wird.

17. Verfahren nach zumindest einem der vorhergehenden Ansprüche, **dadurch gekennzeichnet, daß** der Sensor zusammen mit einer Waschdüse über die Scheibe gefahren, ein hinter der Scheibe angeordneter Scheinwerfer aktiviert wird und daß die Besprühung der Scheibe außerhalb des Bereichs mit hoher Lichtintensität unterbleibt.

18. Verfahren nach zumindest einem der vorhergehenden Ansprüche, **dadurch gekennzeichnet, daß** der Fahrer des Kraftfahrzeuges gewarnt wird, bevor die Scheibe mit Waschflüssigkeit besprüht wird.

19. Verfahren nach zumindest einem der vorhergehenden Ansprüche, **dadurch gekennzeichnet, daß** das Meß- und Reinigungsprogramm nur bei eingeschalteten Scheinwerfern durchgeführt wird.

## Claims

1. Cleaning unit for a screen (4), in particular a diffusing screen of a headlight of a motor vehicle, having at least one washing nozzle, which is provided for the purpose of spraying the screen (4) with washing fluid, and having means for producing a flow of washing fluid through the washing nozzle and having a sensor (14) for detecting a degree of contamination of the screen (4) and a control unit (8) for driving the means for producing the flow, **characterized in that** the sensor (14) is arranged on a holding part (11) which can move over the screen (4).

2. Cleaning unit according to Claim 1, **characterized in that** the sensor (14) is designed to detect visible light or infrared light.

3. Cleaning unit according to Claim 1 or 2, **characterized in that** the sensor (14) is designed to detect the transmission of the light transmitted through the screen (4).

4. Cleaning unit according to at least one of the preceding claims, **characterized in that** the washing nozzle (6) is fixed on the holding part (11).

5. Cleaning unit according to at least one of the preceding claims, **characterized in that** an inductive transmission device for signals from the sensor (14) and for electrical energy for the sensor (14) and for heating the nozzle is arranged between the sensor (14) arranged in the holding part (11) and the control unit (8).

6. Cleaning unit according to at least one of the preceding claims, **characterized in that** plug contacts, which are released from an initial position when the holding part (11) moves, are arranged between the sensor (14) and the control unit (8).

7. Cleaning unit according to at least one of the preceding claims, **characterized in that** a store (16, 17) for signals from the sensor (14) and for electrical energy for the sensor (14) is arranged in the holding part (11).

8. Cleaning unit according to Claim 7, **characterized in that** the store (17) for electrical energy for the sensor (14) is in the form of a capacitor.

9. Cleaning unit according to at least one of the preceding claims, **characterized in that** the control unit (8) is designed to drive a feed pump (12), which supplies washing fluid to the washing nozzle (6), and/or switchable valves which are arranged between the feed pump (12) and the washing nozzle (6).

10. Method for cleaning a screen, in particular a diffusing screen of a headlight of a motor vehicle, with which washing fluid is sprayed onto the screen, the degree of contamination of the screen being detected prior to spraying of the screen, and the spraying being suppressed below a prescribed degree of contamination, **characterized in that** a sensor which detects the degree of contamination is moved over the screen.

11. Method according to Claim 10, **characterized in that** a measuring program for detecting the degree of contamination is started at prescribed intervals.

12. Method according to Claim 10 or 11, **characterized in that** the measuring program is started each time the headlight is switched on.

13. Method according to at least one of the preceding claims, **characterized in that** starting of the measuring program is suppressed below a prescribed speed for the motor vehicle.

14. Method according to at least one of the preceding claims, **characterized in that** the measuring program is restarted after spraying of the screen.

15. Method according to at least one of the preceding claims, **characterized in that** starting of the measuring program is suppressed after a prescribed number of instances of spraying of the screen.

16. Method according to at least one of the preceding claims, **characterized in that**, when the sensor is moved over the screen, a plurality of prescribed measuring points are traversed, and **in that** the degree of contamination is measured at the measuring points.

17. Method according to at least one of the preceding claims, **characterized in that** the sensor, together with a washing nozzle, is moved over the screen, a headlight which is arranged behind the screen is activated and **in that** spraying of the screen is suppressed outside the region having a high light intensity.

18. Method according to at least one of the preceding claims, **characterized in that** the driver of the motor vehicle is warned before the screen is sprayed with washing fluid.

19. Method according to at least one of the preceding claims, **characterized in that** the measuring and cleaning program is carried out only when the headlights are switched on.

## Revendications

1. Système de nettoyage d'une vitre (4), notamment d'un verre diffuseur d'un phare de véhicule automobile, comportant au moins un gicleur de nettoyage prévu pour pulvériser du liquide de nettoyage sur la vitre (4) et des moyens permettant de produire un courant de liquide de nettoyage à travers le gicleur de nettoyage et un détecteur (14) destiné à détecter un degré de salissement de la vitre (4) et une unité de commande (8) destinée à commander les moyens permettant de produire le courant de liquide de nettoyage **caractérisé par le fait que** le détecteur (14) est monté sur une pièce support (11) pouvant être déplacée devant la vitre (4).

2. Système de nettoyage selon la revendication 1 **caractérisé par le fait que** le détecteur (14) est conçu pour détecter de la lumière visible ou de la lumière infrarouge.

3. Système de nettoyage selon la revendication 1 ou 2 **caractérisé par le fait que** le détecteur (14) est conçu pour détecter la transmission de la lumière transmise à travers la vitre (4).

4. Système de nettoyage selon au moins l'une des revendications précédentes **caractérisé par le fait que** le gicleur de lavage (6) est fixé sur la pièce support (11).

5. Système de nettoyage selon au moins l'une des revendications précédentes **caractérisé par le fait que**, entre le détecteur (14) fixé sur la pièce support (11) et l'unité de commande (8), est installé un dispositif de transmission par induction pour des signaux du détecteur (14) et pour de l'énergie électrique destinée au détecteur (14), ainsi qu'à un chauffage du gicleur.

6. Système de nettoyage selon au moins l'une des revendications précédentes **caractérisé par le fait que**, entre le détecteur (14) et l'unité de commande (8), sont disposés des contacts enfichables qui se dégagent d'une position de base lors d'un mouvement de la pièce support (11).

7. Système de nettoyage selon au moins l'une des revendications précédentes **caractérisé par le fait que**, dans la pièce support (11), sont disposés une mémoire (16) pour des signaux du détecteur (14) et un accumulateur (17) pour l'énergie électrique destinée au détecteur (14).

8. Système de nettoyage selon la revendication 7 **caractérisé par le fait que** l'accumulateur (17) pour l'énergie électrique destinée au détecteur (14) est conçu sous la forme d'un condensateur.

9. Système de nettoyage selon au moins l'une des revendications précédentes **caractérisé par le fait que** l'unité de commande (8) est conçue pour commander une pompe d'alimentation (12) alimentant le gicleur de lavage (6) en liquide de lavage et / ou des vannes commutables disposées entre la pompe d'alimentation (12) et le gicleur de lavage (6).

10. Procédé permettant de nettoyer une vitre, notamment un verre diffuseur d'un phare de véhicule automobile, au cours duquel du liquide de lavage est projeté sur la vitre, le degré de salissement de la vitre étant détecté avant la projection du liquide de lavage sur la vitre et la projection du liquide de lavage sur la vitre étant supprimée si le degré de salissement est inférieur à une valeur prévue, **caractérisé par le fait qu'**un détecteur saisissant le degré de salissement est déplacé devant la vitre.

11. Procédé selon la revendication 10 **caractérisé par le fait que,** à des intervalles de temps prévus, un programme de mesure destiné à détecter le degré de salissement est lancé.

12. Procédé selon la revendication 10 ou 11 **caractérisé par le fait que** le programme de mesure est lancé lors de chaque mise sous tension du phare.

13. Procédé selon au moins l'une des revendications précédentes **caractérisé par le fait qu'**un démarrage du programme de mesure est empêché à une vitesse du véhicule automobile inférieure à une vitesse prévue.

14. Procédé selon au moins l'une des revendications précédentes **caractérisé par le fait que** le programme de mesure est lancé une nouvelle fois après un arrosage de la vitre.

15. Procédé selon au moins l'une des revendications précédentes **caractérisé par le fait que** le démarrage du programme de mesure est empêché après un nombre prévu d'arrosage de la vitre.

16. Procédé selon au moins l'une des revendications précédentes **caractérisé par le fait que**, lors du déplacement du détecteur devant la vitre, le détecteur passe par plusieurs points de mesure prévus et que le degré de salissement est mesuré aux points de mesure.

17. Procédé selon au moins l'une des revendications précédentes **caractérisé par le fait que** le détecteur est déplacé devant la vitre en commun avec un gicleur de lavage, qu'un phare disposé derrière la vitre est activé et que la projection de liquide sur la vitre est supprimée à l'extérieur de la zone d'intensité lumineuse élevée.

18. Procédé selon au moins l'une des revendications précédentes **caractérisé par le fait que** le conducteur du véhicule automobile est prévenu avant que le liquide de lavage est projeté sur la vitre.

19. Procédé selon au moins l'une des revendications précédentes **caractérisé par le fait que** le programme de mesure et le programme de nettoyage ne sont exécutés que si les phares sont allumés.
